# EUROPEAN PATENT APPLICATION

(11) **EP 4 470 655 A1**
(43) Date of publication of application: **04.12.2024**
(21) Application number: 24178685.4
(22) Date of filing: 29.05.2024
(51) Int. Cl.: B01D 53/22, B01D 69/02, B01D 71/70, B01D 69/12, B01D 69/10

(54) **GAS SEPARATION MEMBRANE**

(30) Priority: 29.05.2023 JP 2023087719
(71) Applicant: Seiko Epson Corporation, Tokyo 160-8801 (JP)
(72) Inventor: ARAI, Akira, Suwa-shi, 392-8502 (JP)
(74) Representative: Lewis Silkin LLP

(57) **Abstract**

A gas separation membrane for separating carbon dioxide from a mixed gas containing the carbon dioxide and a non-target component includes: a porous layer; and a separation layer formed of a polymer material and in close contact with one surface of the porous layer. t is 5 nm or more and 500 nm or less, a ratio d/t is more than 2.0 and 100 or less, and a ratio T/t is 100 or more and 10000 or less, where t is an average thickness of the separation layer, d is an average hole diameter of the porous layer, and T is an average thickness of the porous layer.

## Description

The present application is based on, and claims priority from JP Application Serial Number 2023-087719, filed May 29, 2023, the disclosure of which is hereby incorporated by reference herein in its entirety.

### BACKGROUND

### 1. Technical Field

The present disclosure relates to a gas separation membrane.

### 2. Related Art

In order to implement carbon neutrality or carbon minus, a technique is being considered to absorb and collect carbon dioxide discharged from thermal power plants, boiler facilities, or the like, and carbon dioxide in the atmosphere. As the technique, there has been known a membrane separation method of separating carbon dioxide using a gas separation membrane.

For example, JP-A-60-75320 discloses a gas selective permeable membrane that selectively allows a specific gas to permeate therethrough. The gas selective permeable membrane is manufactured through a process of laminating a thin membrane of a siloxane compound on a film-shaped polymer porous support, subjecting a surface layer of the thin membrane to a plasma treatment with a non-polymerizable gas, and depositing a plasma polymerized membrane on the thin membrane. It is disclosed that a gas selective permeable membrane having strong adhesion between a thin membrane and a plasma polymerized membrane can be obtained by these processes, and a thickness of the thin membrane is 1 µm to 30 µm. Further, it is disclosed that the gas selective permeable membrane is used to selectively allow gases such as oxygen, hydrogen, helium, and the like to permeate therethrough, and the separated gases are collected.

JP-A-60-75320 is an example of the related art.

The gas selective permeable membrane described in JP-A-60-75320 requires a large differential pressure to allow a predetermined component to permeate therethrough. Therefore, energy consumption in separating the component may be large. When attempting to increase a permeability of a predetermined component, a separation performance of the component may decrease, and conversely, when attempting to increase the separation performance of the predetermined component, the permeability of the component may decrease.

Therefore, it is required to implement a gas separation membrane that is excellent in mechanical characteristics and can achieve both gas selectivity ratio of carbon dioxide and gas permeability of carbon dioxide.

### SUMMARY

A gas separation membrane according to an application example of the present disclosure is a gas separation membrane for separating carbon dioxide from a mixed gas containing the carbon dioxide and a non-target component. The gas separation membrane includes: a porous layer; and a separation layer formed of a polymer material and in close contact with one surface of the porous layer. t is 5 nm or more and 500 nm or less, a ratio d/t is more than 2.0 and 100 or less, and a ratio T/t is 100 or more and 10000 or less, where t is an average thickness of the separation layer, d is an average hole diameter of the porous layer, and T is an average thickness of the porous layer.

### BRIEF DESCRIPTION OF THE DRAWINGS

FIG. 1 is a cross-sectional view schematically showing a gas separation membrane according to an embodiment.
FIG. 2 is a cross-sectional view schematically showing a gas separation membrane according to a modification of the embodiment.

### DESCRIPTION OF EMBODIMENTS

Hereinafter, a gas separation membrane according to the present disclosure will be described in detail based on embodiments shown in the accompanying drawings.

### 1. Gas Separation Membrane

First, a configuration of a gas separation membrane according to an embodiment will be described.

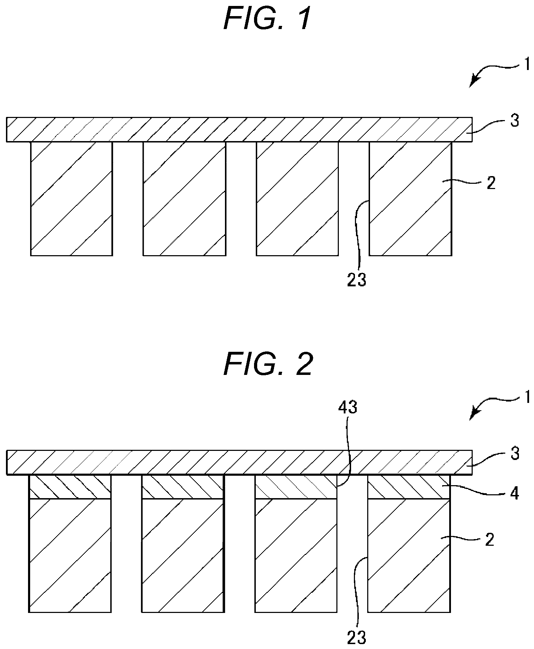

FIG. 1 is a cross-sectional view schematically showing a gas separation membrane 1 according to the embodiment.

The gas separation membrane 1 shown in FIG. 1 has a function of selectively allowing carbon dioxide to permeate therethrough from a mixed gas containing the carbon dioxide and a non-target component. The gas separation membrane 1 shown in FIG. 1 includes a porous layer 2 and a separation layer 3. The non-target component refers to a gas component other than the carbon dioxide that is contained in the mixed gas.

The porous layer 2 is a porous membrane having holes 23 shown in FIG. 1. Such a porous layer 2 has a good gas permeability and supports the separation layer 3. Accordingly, mechanical characteristics of the gas separation membrane 1 as a whole can be improved without impairing a good gas selectivity ratio of the separation layer 3.

The separation layer 3 is provided on one surface of the porous layer 2, and is formed of a polymer material that is denser (lower in porosity) than the porous layer 2. Such a separation layer 3 closes upper ends of the holes 23. The separation layer 3 has a good gas selectivity ratio that allows the carbon dioxide in the mixed gas supplied upstream of the gas separation membrane 1 to selectively permeate downstream. Accordingly, the gas separation membrane 1 can separate the carbon dioxide in the mixed gas. In the following description, an upper side of the gas separation membrane 1 shown in FIG. 1 is referred to as "upstream" or simply referred to as "upper", and a lower side thereof is referred to as "downstream" or simply referred to as "lower".

Examples of the non-target component include nitrogen and methane, and nitrogen is particularly envisaged. Therefore, examples of the above-described mixed gas include a mixed gas of carbon dioxide and nitrogen.

### 1.1. Porous Layer

As described above, the porous layer 2 is a porous membrane having the holes 23, and has a good gas permeability. The porous layer 2 has a rigidity higher than that of the separation layer 3, and is responsible for ensuring self-standing and durability of the gas separation membrane 1 as a whole.

Examples of a material of the porous layer 2 include a polymer material, a ceramic material, and a metal material. Since the materials have a high rigidity, they are particularly useful in terms of improving the mechanical characteristics of the gas separation membrane 1. The material of the porous layer 2 may be a composite material of these materials and other materials.

Examples of the polymer material include polyolefin resins such as polyethylene and polypropylene, fluorine-containing resins such as polytetrafluoroethylene, polyvinyl fluoride, and polyvinylidene fluoride, polystyrene, cellulose, cellulose acetate, polyurethane, polyacrylonitrile, polyphenylene oxide, polysulfone, polyethersulfone, polyimide, polyaramid, and nylon.

Examples of the ceramic material include alumina, cordierite, mullite, silicon carbide, and zirconia. Examples of the metal material include stainless steel.

Among them, the ceramic material is preferably used as the material of the porous layer 2. Since the ceramic material has a high rigidity and is a sintered material, the ceramic material has continuous holes. Therefore, by using the ceramic material as the material of the porous layer 2, the gas separation membrane 1 that is excellent in mechanical characteristics and has a high gas permeability of carbon dioxide can be obtained.

A shape of the porous layer 2 may be a spiral shape, a tubular shape, a hollow fiber shape, or the like, in addition to a flat plate shape shown in FIG. 1.

An average thickness T of the porous layer 2 is not particularly limited, and is preferably 10 µm or more and 500 µm or less, more preferably 20 µm or more and 300 µm or less, and still more preferably 30 µm or more and 200 µm or less. Accordingly, the porous layer 2 has a necessary and sufficient rigidity to support the gas separation membrane 1. When the average thickness T of the porous layer 2 is less than the lower limit value, the rigidity may be insufficient. On the other hand, when the average thickness T of the porous layer 2 exceeds the upper limit value, the rigidity of the porous layer 2 may become too high, and handleability of the gas separation membrane 1 may decrease or adhesion of the separation layer 3 may decrease.

The average thickness T of the porous layer 2 is an average value of thicknesses measured at 10 positions of the porous layer 2 in a stacking direction. The thickness of the porous layer 2 can be measured using, for example, a thickness gauge.

The porous layer 2 includes the holes 23, and an average inner diameter thereof is referred to as an "average hole diameter d". The average hole diameter d of the porous layer 2 is preferably 5 nm or more and 1000 nm or less, more preferably 10 nm or more and 800 nm or less, still more preferably 50 nm or more and 400 nm or less, and particularly preferably 100 nm or more and 300 nm or less. Accordingly, the separation layer 3 can be prevented from slipping out downstream of the porous layer 2 while sufficiently ensuring the gas permeability of carbon dioxide in the porous layer 2. When the average hole diameter d of the porous layer 2 is less than the lower limit value, the gas permeability of carbon dioxide in the porous layer 2 may decrease. On the other hand, when the average hole diameter d of the porous layer 2 exceeds the upper limit value, the separation layer 3 may slip out downstream of the porous layer 2.

The average hole diameter d of the porous layer 2 can be measured by a through pore diameter evaluation device after the separation layer 3 is removed from the gas separation membrane 1 and the single porous layer 2 is taken out. Examples of the through pore diameter evaluation device include a perm porometer manufactured by PMI.

A porosity of the porous layer 2 is preferably 20% or more and 90% or less, and more preferably 30% or more and 80% or less. Accordingly, the porous layer 2 can achieve both good gas permeability and sufficient rigidity.

The porosity of the porous layer 2 can be measured by the above-described through pore diameter evaluation device after the separation layer 3 is removed from the gas separation membrane 1.

### 1.2. Separation layer

The separation layer 3 is formed at an upstream surface of the porous layer 2. Therefore, the separation layer 3 is a substantially dense membrane and has a good affinity with carbon dioxide molecules. Due to the affinity, the separation layer 3 selectively allows carbon dioxide to permeate therethrough.

A material of the separation layer 3 is a polymer material. Examples of the polymer material include polyolefin resins such as polyethylene and polypropylene, fluorine-containing resins such as polytetrafluoroethylene, polyvinyl fluoride, and polyvinylidene fluoride, polystyrene, cellulose, cellulose acetate, polyurethane, polyacrylonitrile, polyphenylene oxide, polysulfone, polyethersulfone, polyimide, polyaramid, organopolysiloxane, polyethylene terephthalate (PET), polyacetal (POM), and polylactic acid (PLA). The material of the separation layer 3 may be one of the polymer materials or a composite material of two or more of the polymer materials.

Among them, an organopolysiloxane is preferably used as the material of the separation layer 3. One molecule of the organopolysiloxane includes at least a unit (a T unit) represented by R¹SiO_{3/2}, a unit (a D unit) represented by R²R³SiO_{2/2}, and a unit (an M unit) represented by R⁴R⁵R⁶SiO_{1/2} as a basic constituent unit. In each unit, R¹ to R⁶ are an aliphatic hydrocarbon or a hydrogen atom. One molecule of the organopolysiloxane includes a combination of the T unit, the D unit, and the M unit.

Specific examples of the organopolysiloxane include polydimethylsiloxane, polymethylphenylsiloxane, polydiphenylsiloxane,
a polysulfone/polyhydroxystyrene/polydimethylsiloxane copolymer,
a dimethylsiloxane/methylvinylsiloxane copolymer,
a dimethylsiloxane/diphenylsiloxane/methylvinylsiloxane copolymer,
a methyl-3,3,3-trifluoropropylsiloxane/methylvinylsiloxane copolymer,
a dimethylsiloxane/methylphenylsiloxane/methylvinylsiloxane copolymer, vinyl terminated diphenylsiloxane/dimethylsiloxane copolymer, vinyl terminated polydimethylsiloxane, amino terminated polydimethylsiloxane, phenyl terminated polydimethylsiloxane, H terminated polydimethylsiloxane, and a dimethylsiloxane-methylhydrosiloxane copolymer. The expression "vinyl terminated" or the like indicates that at least one end of a main chain contained in the organopolysiloxane is substituted with a substituent such as a vinyl group. This includes a form in which a crosslinking reactant is formed. The material of the separation layer 3 may be one kind or a composite of two or more kinds thereof, or may be a composite material containing an organopolysiloxane as a main component in mass ratio and other resin components in combination.

The organopolysiloxane has a good affinity with carbon dioxide. Therefore, the gas separation membrane 1 including the separation layer 3 containing an organopolysiloxane exhibits a high gas selectivity ratio to carbon dioxide.

An average thickness t of the separation layer 3 is 5 nm or more and 500 nm or less. When the average thickness t is within the above range, the separation layer 3 is less likely to have a defect, and thus the separation layer 3 has a sufficient gas permeability while ensuring a good gas selectivity ratio. As a result, the gas separation membrane 1 that has a good selective separability of carbon dioxide, and can reduce an input amount of energy necessary for separation, specifically, can reduce a pressure difference between pressures upstream and downstream of the gas separation membrane 1 can be implemented. When the average thickness t of the separation layer 3 is less than the lower limit value, a probability of occurrence of defects in the separation layer 3 increases, or the separation layer 3 is easily broken afterwards. On the other hand, when the average thickness t of the separation layer 3 exceeds the upper limit value, the gas permeability of carbon dioxide in the separation layer 3 decreases, the input amount of energy necessary for separation increases, and flexibility of the separation layer 3 decreases.

The average thickness t of the separation layer 3 is preferably 7 nm or more and 300 nm or less, and more preferably 10 nm or more and 100 nm or less.

The average thickness t of the separation layer 3 can be obtained, for example, by observing a cross section of the gas separation membrane 1 under magnification and averaging thicknesses at 10 locations. For the magnification observation, for example, a scanning electron microscope or a transmission electron microscope is used.

Any intermediate layer may be interposed between the separation layer 3 and the porous layer 2. The intermediate layer may have, for example, a function of increasing adhesion between the separation layer 3 and the porous layer 2, a function of preventing the separation layer 3 from entering the holes 23, and the like.

If necessary, any functional group may be introduced into an upstream surface of the separation layer 3 using a coupling agent or the like. By appropriately selecting the functional group, the affinity with carbon dioxide can be further increased.

The separation layer 3 may be a functionally graded layer configured such that a composition and structure thereof change along a thickness direction. In the functionally graded layer, a function can be changed such that, for example, an affinity with carbon dioxide is increased upstream of the separation layer 3, and a permeability of carbon dioxide is increased downstream of the separation layer 3. Accordingly, both gas selectivity ratio and gas permeability of carbon dioxide can be particularly increased.

1.3. Ratio d/t of Average Hole Diameter d of Porous Layer 2 to Average Thickness t of Separation Layer 3

In the gas separation membrane 1, a ratio d/t of the average hole diameter d of the porous layer 2 to the average thickness t of the separation layer 3 is more than 2.0 and 100 or less. When the ratio d/t is within the above range, both gas selectivity ratio of carbon dioxide and gas permeability of carbon dioxide in the gas separation membrane 1 can be increased. When the ratio d/t is less than the lower limit value, the average hole diameter d becomes too small, and the gas permeability of the porous layer 2 decreases. Therefore, the gas permeability of carbon dioxide in the gas separation membrane 1 decreases. On the other hand, when the ratio d/t exceeds the upper limit value, the average hole diameter d becomes too large and the separation layer 3 enters into the holes 23, which makes it difficult to form the uniform separation layer 3. In this case, a coverage of the porous layer 2 by the separation layer 3 decreases, and the gas selectivity ratio of carbon dioxide in the gas separation membrane 1 decreases.

The ratio d/t is preferably 2.5 or more and 80 or less, more preferably 3.0 or more and 50 or less, and still more preferably 5.0 or more and 30 or less.

1.4. Ratio T/t of Average Thickness T of Porous Layer 2 to Average Thickness t of Separation Layer 3

In the gas separation membrane 1, the ratio T/t of the average thickness T of the porous layer 2 to the average thickness t of the separation layer 3 is 100 or more and 10000 or less. When the ratio T/t is within the above range, the gas separation membrane 1 that increases both gas selectivity ratio of carbon dioxide and gas permeability of carbon dioxide and is excellent in mechanical characteristics can be obtained. When the ratio T/t is less than the lower limit value, the average thickness T of the porous layer 2 becomes too thin, and the mechanical characteristics decrease. Therefore, for example, self-standing of the gas separation membrane 1 is impaired. When the self-standing is impaired, the handleability of the gas separation membrane 1 decreases. On the other hand, when the ratio T/t exceeds the upper limit value, the average thickness T of the porous layer 2 becomes too large, and a difference between the average thickness T of the porous layer 2 and the average thickness t of the separation layer 3 becomes large. Therefore, ability to follow the porous layer 2 during deformation of the gas separation membrane 1 decreases. In this case, the separation layer 3 may be peeled off or damaged.

The ratio T/t is preferably 1000 or more and 9000 or less, more preferably 2000 or more and 8000 or less, and still more preferably 3000 or more and 7000 or less.

### 2. Method for Manufacturing Gas Separation Membrane

Next, a method for manufacturing the gas separation membrane 1 shown in FIG. 1 will be described.

First, the separation layer 3 is formed at one surface of the porous layer 2. Examples of the method for forming the separation layer 3 include a sol gel method, a coating method, a plasma CVD method, a plasma polymerization method, and an atomic layer deposition (ALD) method. Examples of the coating method include a dipping method, a dripping method, an inkjet method, a dispenser method, a spraying method, a screen printing method, a coater coating method, and a spin coating method.

When the material of the separation layer 3 is an organopolysiloxane, the plasma polymerization method is preferably used. According to the plasma polymerization method, the organopolysiloxane can be deposited while cleaning and activating the porous layer 2. Accordingly, the formed separation layer 3 is more firmly in close contact with the porous layer 2. Since the plasma polymerization method is a type of a vapor deposition method, a part of molecules to be deposited adheres to inner walls of the holes 23 of the porous layer 2. Accordingly, the adhesion of the separation layer 3 can be further improved. Further, since a membrane (a plasma polymerized membrane) formed by the plasma polymerization method is densified, the separation layer 3 including fewer through holes (defects) can be formed. In the case of the plasma polymerization method, the average thickness t can be controlled, for example, by adjusting a membrane formation time.

Examples of a raw material gas used in the plasma polymerization method include organosiloxanes such as methylsiloxane, octamethyltrisiloxane, decamethyltetrasiloxane, decamethylcyclopentasiloxane, octamethylcyclotetrasiloxane, and methylphenylsiloxane.

A pressure inside a chamber used in the plasma polymerization method is preferably about 133.3 × 10⁻⁵ Pa or more and 1333 Pa or less (1 × 10⁻⁵ Torr or more and 10 Torr or less).

A temperature of the porous layer 2 used in the plasma polymerization method is preferably about 25°C or higher and 100°C or lower, and a membrane formation time is preferably about 1 minute or more and 10 minutes or less.

When the material of the separation layer 3 is an organopolysiloxane, the separation layer 3 can be formed by the following coating method. In the coating method, for example, a resin solution obtained by mixing an organopolysiloxane before a curing reaction and a solvent is used. The resin solution is applied to one surface of the porous layer 2 and then cured. Thus, the separation layer 3 is obtained.

### 3. Modification

Next, the gas separation membrane 1 according to a modification of the embodiment will be described.

FIG. 2 is a cross-sectional view schematically showing the gas separation membrane 1 according to the modification of the embodiment.

Hereinafter, the modification of the embodiment will be described, and in the following description, differences from the above-described embodiment will be mainly described, and description of similar matters will be omitted. In FIG. 2, the same reference numerals are given to matters the same as those in FIG. 1.

The gas separation membrane 1 shown in FIG. 2 is the same as the gas separation membrane 1 shown in FIG. 1 except that an intermediate layer 4 is provided between the porous layer 2 and the separation layer 3.

Since the intermediate layer 4 is formed at an upstream surface of the porous layer 2, the intermediate layer 4 inherits a porosity of the porous layer 2 and has holes 43. Therefore, the intermediate layer 4 achieves a large adhesion force through the close contact between the porous layer 2 and the separation layer 3, and also has a good gas permeability without nearly blocking the holes 23 of the porous layer 2.

A material of the intermediate layer 4 is an organopolysiloxane. As the organopolysiloxane, those described above are used. The material of the intermediate layer 4 may be the same as or may be different from the material of the separation layer 3.

The intermediate layer 4 is chemically bonded to the separation layer 3. A chemical bond includes a hydrogen bond, a covalent bond, or the like, and a covalent bond is particularly preferred. Accordingly, the separation layer 3 is more firmly in close contact with the porous layer 2 via the intermediate layer 4. As a result, the gas separation membrane 1 has particularly good mechanical characteristics.

Such good mechanical characteristics can provide a freedom degree to the form of the gas separation membrane 1 during use. For example, the gas separation membrane 1 may be used in a curved state or a bent state. When the gas separation membrane 1 is used in such a state, peeling may occur between the porous layer 2 and the separation layer 3 when an adhesion strength is low.

On the other hand, by interposing the intermediate layer 4, the adhesion strength can be increased and the occurrence of peeling or the like can be prevented. As a result, the gas separation membrane 1 is less likely to be broken even when used in a curved state or a bent state. In the bent state, for example, a surface area of the gas separation membrane 1 can be increased without increasing an area of a module using the gas separation membrane 1. Therefore, a density of the module using the gas separation membrane 1 can be increased.

An average thickness of the intermediate layer 4 is not particularly limited, and is preferably 1000 nm or less, more preferably 3 nm or more and 500 nm or less, and still more preferably 5 nm or more and 300 nm or less. Accordingly, the intermediate layer 4 has a sufficient adhesion force. Since the intermediate layer 4 does not become too thick and has the holes 43, the intermediate layer 4 has a good gas permeability like the porous layer 2.

A total of the average thickness of the separation layer 3 and the average thickness of the intermediate layer 4 is preferably 1500 nm or less, more preferably 50 nm or more and 500 nm or less, and even more preferably 100 nm or more and 400 nm or less. Accordingly, the separation layer 3 is strongly in close contact with the porous layer 2 via the intermediate layer 4, and the intermediate layer 4 is less likely to inhibit the good gas permeability of the porous layer 2.

The average thickness of the intermediate layer 4 may be larger than or equal to the average thickness of the separation layer 3, and is preferably set to be smaller than the separation layer 3. In this case, a difference between the average thickness of the separation layer 3 and the average thickness of the intermediate layer 4 is preferably more than 0 nm and 300 nm or less, more preferably 10 nm or more and 150 nm or less, and still more preferably 15 nm or more and 100 nm or less. Accordingly, a balance between the thicknesses of the separation layer 3 and the intermediate layer 4 is improved, peeling or the like due to an excessively large difference in membrane thickness is less likely to occur, and the separation layer 3 and the intermediate layer 4 can favorably exhibit respective functions thereof. The difference is obtained by subtracting the average thickness of the intermediate layer 4 from the average thickness of the separation layer 3.

Next, a method for manufacturing the gas separation membrane according to the modification of the embodiment will be described.

First, an organopolysiloxane is deposited at one surface of the porous layer 2. Thus, the intermediate layer 4 is obtained.

Examples of the organopolysiloxane depositing method include a sol gel method, a coating method, a plasma CVD method, a plasma polymerization method, and an atomic layer deposition (ALD) method. Among them, a plasma polymerization method is preferably used. According to the plasma polymerization method, the organopolysiloxane can be deposited while cleaning and activating the porous layer 2. Accordingly, the formed intermediate layer 4 is more firmly in close contact with the porous layer 2. Since the plasma polymerization method is a type of a vapor deposition method, a part of molecules to be deposited adheres to inner walls of the holes 23 of the porous layer 2. Accordingly, the adhesion of the intermediate layer 4 can be further improved. Further, since the membrane (the plasma polymerized membrane) formed by the plasma polymerization method is densified, the intermediate layer 4 capable of more firmly anchoring the separation layer 3 to the porous layer 2 is formed.

Examples of a raw material gas used in the plasma polymerization method include organosiloxanes such as methylsiloxane, octamethyltrisiloxane, decamethyltetrasiloxane, decamethylcyclopentasiloxane, octamethylcyclotetrasiloxane, and methylphenylsiloxane.

A pressure inside a chamber used in the plasma polymerization method is preferably about 133.3 × 10⁻⁵ Pa or more and 1333 Pa or less (1 × 10⁻⁵ Torr or more and 10 Torr or less).

A temperature of the porous layer 2 used in the plasma polymerization method is preferably about 25°C or higher and 100°C or lower, and a membrane formation time is preferably about 1 minute or more and 10 minutes or less.

Next, a sheet serving as a sacrificial layer is prepared, and the separation layer 3 is formed at a surface thereof. A method for forming the separation layer 3 is as described above.

Examples of a material of the sacrificial layer include a material that is dissolved in a solvent or the like. Examples of the material of the sacrificial layer include water-soluble resins such as polyvinyl alcohol, polyethylene oxide, and gelatin, and acrylic resins. Among them, the water-soluble resin is suitable as the material of the sacrificial layer because it is easily dissolved in an aqueous solvent.

Next, the intermediate layer 4 is subjected to an activation treatment. Examples of the activation treatment include a method of irradiating the intermediate layer 4 with energy rays, a method of heating the intermediate layer 4, a method of exposing the intermediate layer 4 to plasma or corona, and a method of exposing the intermediate layer 4 to ozone gas. Examples of the energy ray include infrared rays, ultraviolet rays, and visible light. When the activation treatment is performed, a part of organic groups of the organopolysiloxane constituting the intermediate layer 4 is eliminated. After the elimination of the organic group, active species are generated by adsorption of H atoms or moisture to dangling bonds. Examples of the active species include a Si-H group and a Si-OH group. The activation treatment may be performed as necessary, and may be omitted when sufficient active species are present. The intermediate layer 4 can be cleaned by the activation treatment, which can contribute to further improvement in bonding strength.

Similarly, the separation layer 3 is also subjected to the activation treatment. Accordingly, active species are generated in the separation layer 3 as well. The activation treatment may also be performed as necessary, and may be omitted when sufficient active species are present.

Next, activated surfaces of the separation layer 3 and the intermediate layer 4 are brought into contact with each other. Then, a pressure is applied in this state. Accordingly, the activated surfaces are bonded to each other. The bonding is based on a chemical bond. Specifically, when the surfaces are brought into contact with each other, for example, a hydrogen bond is generated between the active species. Next, when the separation layer 3 and the intermediate layer 4 are pressurized, dehydration polycondensation occurs between the active species. As a result, the surfaces are bonded to each other by a covalent bond.

According to such a method, no inclusion is present at a bonding interface. Therefore, the gas separation membrane 1 having good mechanical characteristics, a gas permeability, and a selective separability can be obtained without inhibiting gas permeation at the bonding interface.

Next, the sacrificial layer is removed. Thus, the gas separation membrane 1 is obtained. Removal of the sacrificial layer is performed, for example, by bringing the sacrificial layer into contact with a solvent containing water, an organic solvent, or the like. Accordingly, the sacrificial layer can be dissolved and removed. With such a method, even when the separation layer 3 is thin, the sacrificial layer can be removed without affecting the separation layer 3. Therefore, the gas separation membrane 1 including the separation layer 3 having a low porosity even when it is thin can be manufactured.

A clean surface of the material is exposed on a surface of the separation layer 3 from which the sacrificial layer is removed. In this surface, an affinity of the material with carbon dioxide is sufficiently exhibited. Therefore, the gas separation membrane 1 manufactured by the above method is particularly excellent in selective separability of carbon dioxide.

### 4. Use of Gas Separation Membrane

The gas separation membrane 1 according to the embodiment can be used for gas separation and collection, gas separation and purification, and the like. For example, the gas separation membrane 1 is used to efficiently separate carbon dioxide from a mixed gas containing gas components such as hydrogen, helium, carbon monoxide, carbon dioxide, hydrogen sulfide, oxygen, nitrogen, ammonia, sulfur oxide, nitrogen oxide, saturated hydrocarbons such as methane and ethane, unsaturated hydrocarbons such as propylene, and perfluoro hydrocarbons such as tetrafluoroethane. Accordingly, for example, the gas separation membrane 1 can be effectively used in a technique of separating and collecting carbon dioxide contained in the atmosphere (direct air collection (DAC)) or a technique of separating and collecting carbon dioxide from crude oil-associated gas or natural gas, whose main component is methane.

### 5. Effects of Embodiment

As described above, the gas separation membrane 1 according to the embodiment includes the porous layer 2 and the separation layer 3, and separates carbon dioxide from a mixed gas containing the carbon dioxide and a non-target component. The separation layer 3 is formed of a polymer material and in close contact with one surface of the porous layer 2. t is 5 nm or more and 500 nm or less, a ratio d/t is more than 2.0 and 100 or less, and a ratio T/t is 100 or more and 10000 or less, where t is an average thickness of the separation layer 3, d is an average hole diameter of the porous layer 2, and T is an average thickness of the porous layer 2.

According to such a configuration, the gas separation membrane 1 that is excellent in mechanical characteristics and can favorably achieve both gas selectivity ratio of carbon dioxide and gas permeability of carbon dioxide can be obtained.

The polymer material preferably contains an organopolysiloxane.

According to such a configuration, the separation layer 3 having a good affinity with carbon dioxide can be obtained. Therefore, the gas separation membrane 1 exhibiting a high gas selectivity ratio with respect to carbon dioxide can be obtained.

The average hole diameter d of the porous layer 2 is preferably 5 nm or more and 1000 nm or less.

According to such a configuration, the separation layer 3 can be prevented from slipping out downstream of the porous layer 2 while sufficiently ensuring the gas permeability of carbon dioxide in the porous layer 2.

The average thickness T of the porous layer 2 is preferably 10 µm or more and 500 µm or less.

According to such a configuration, the porous layer 2 has a necessary and sufficient rigidity to support the gas separation membrane 1.

A material of the porous layer 2 may be a polymer material, a ceramic material, or a metal material.

According to such a configuration, since the material of the porous layer 2 has a high rigidity, the mechanical characteristics of the gas separation membrane 1 can be improved.

Although the gas separation membrane according to the present disclosure has been described based on the preferred embodiment, the present disclosure is not limited thereto.

For example, in the gas separation membrane according to the present disclosure, each part of the embodiments described above may be replaced with a component having a similar function, or any component may be added to the embodiments described above. Examples

Next, specific examples according to the present disclosure will be described.

### 6. Preparation of Gas Separation Membrane

### 6.1. Sample No. 1

First, an organopolysiloxane was deposited, by a plasma polymerization method, on one surface of a porous layer formed of alumina (Al₂O₃). Thus, a separation layer was obtained. Octamethyltrisiloxane was used as a raw material gas, and a material of the obtained separation layer was an organopolysiloxane. A porosity of the porous layer was 50%. A configuration of the gas separation membrane is as shown in Table 1.

### 6.2. Sample Nos. 2 to 16

Gas separation membranes were produced in the same manner as in the case of Sample No. 1 except that configurations of the gas separation membranes were changed as shown in Table 1.

### 6.3. Sample No. 17

A gas separation membrane was produced in the same manner as in the case of Sample No. 1 except that a configuration of the gas separation membrane was changed as shown in Table 2. A method for producing the gas separation membrane of Sample No. 17 is as follows.

First, an organopolysiloxane was deposited, by a plasma polymerization method, on one surface of a porous layer formed of alumina. Thus, an intermediate layer was obtained. Octamethyltrisiloxane was used as a raw material gas.

Next, an organopolysiloxane was deposited, by a plasma polymerization method, on one surface of a water-soluble film as a sacrificial layer. Thus, a separation layer was obtained. Octamethyltrisiloxane was used as a raw material gas.

Next, the intermediate layer and the separation layer were each subjected to an activation treatment of irradiating the intermediate layer and the separation layer with ultraviolet rays. Subsequently, activated surfaces were overlapped so as to be in contact with each other, and pressure was applied while heating. Thus, a gas separation membrane was obtained.

### 6.4. Sample Nos. 18 and 19

Gas separation membranes were produced in the same manner as in the case of Sample No. 17 except that configurations of the gas separation membranes were changed as shown in Table 2.

### 6.5. Sample No. 20

A gas separation membrane was produced in the same manner as in the case of Sample No. 1 except that a configuration of the gas separation membrane was changed as shown in Table 3. A method for producing the gas separation membrane of Sample No. 20 is as follows.

First, an O/W type emulsion containing polylactic acid (PLA) was prepared. Next, the O/W type emulsion, glycerin, triethylene glycol monobutyl ether, and 2-pyrrolidone were mixed to prepare an ink.

Next, an inkjet film was formed using the prepared ink by an inkjet method. Thus, a separation layer was obtained.

### 6.6. Sample Nos. 21 and 22

Gas separation membranes were produced in the same manner as in the case of Sample No. 20 except that configurations of the gas separation membranes were changed as shown in Table 3.

In Tables 1 to 3, the gas separation membrane corresponding to the present disclosure is indicated as "Example", and the gas separation membrane not corresponding to the present disclosure is indicated as "Comparative Example". In Tables 1 and 2, "p-OPS" indicates an organopolysiloxane generated by a plasma polymerization method, "a-OPS" indicates an amino terminated polydimethylsiloxane formed by a coating method, and "ph-OPS" indicates a phenyl terminated polydimethylsiloxane formed by a coating method.

### 7. Evaluation of Gas Separation Membrane

The gas separation membranes of each Example and each Comparative Example were evaluated as follows.

### 7.1. Coverage of Separation Layer

For the gas separation membranes of each Example and each Comparative Example, a cross section of the separation layer was observed with an electron microscope, and an area of a defect was calculated. An area of a defect-free region with respect to an area of an observation region was calculated as a "coverage of the separation layer". Calculation results are shown in Tables 1 to 3.

### 7.2. Gas Permeability and Gas Selectivity ratio of Carbon Dioxide

The gas separation membranes of each Example and each Comparative Example were cut into a circle having a diameter of 5 cm to prepare test samples. Next, using a gas permeability measuring device, a mixed gas obtained by mixing carbon dioxide: nitrogen at a volume ratio of 13:87 was supplied upstream of the test samples. A total upstream pressure was adjusted to 5 MPa, a partial pressure of carbon dioxide was adjusted to 0.65 MPa, a flow rate was adjusted to 500 mL/min, and a temperature was adjusted to 40°C. A gas component that permeated through the test sample was analyzed by gas chromatography.

Next, the gas permeability R_{CO2} of carbon dioxide and the gas permeability R_{N2} of nitrogen in the gas separation membrane were obtained from the analysis results, and the gas selectivity ratio R_{CO2}/R_{N2} of carbon dioxide to nitrogen was calculated. Calculation results are shown in Tables 1 to 3.

### 7.3. Mechanical Characteristic

### 7.3.1. Self-standing

For the gas separation membranes of each Example and each Comparative Example, ends of the test samples prepared in 7.2 were sandwiched with a jig and fixed such that sandwiched portions were horizontal.

Next, a distance that the test sample sags downward was measured. Specifically, a distance between a lowest part of the test sample and the jig in a vertical direction was measured. Then, the measured distance was evaluated based on the following evaluation criteria. In the following evaluation criteria, the distance measured for the test sample of Sample No. 13 is defined as a "standard value". Evaluation results are shown in Tables 1 to 3.
A: The sagging distance is small (less than half of the standard value)
B: The sagging distance is slightly small (equal to or more than half of the standard value and less than the standard value)
C: The sagging distance is large (equal to or more than the standard value)

### 7.3.2. Folding Endurance

The gas separation membranes of each Example and each Comparative Example were bent into a bellows shape, and then the bent gas separation membranes were stretched. After the operation was repeated 10 times, the gas separation membranes were cut into a circular shape having a diameter of 5 cm to prepare test samples.

Next, a gas selectivity ratio R_{CO2}/R_{N2} of the test sample was calculated by the same method as in 7.2. Then, a difference between the gas selectivity ratio R_{CO2}/R_{N2} before the bending test was performed and the gas selectivity ratio R_{CO2}/R_{N2} after the bending test was performed was calculated as a decrease width of the gas selectivity ratio R_{CO2}/R_{N2}. The decrease width is an index quantitatively representing a degree of deterioration in gas selectivity ratio R_{CO2}/R_{N2} due to the bending test. The mechanical characteristics of the gas separation membrane were relatively evaluated by comparing the calculated decrease width with the following evaluation criteria. Evaluation results are shown in Tables 1 to 3.
A: The decrease width of the gas selectivity ratio R_{CO2}/R_{N2} is small (less than 3)
B: The decrease width of the gas selectivity ratio R_{CO2}/R_{N2} is moderate (3 or more and less than 6)
C: The decrease width of the gas selectivity ratio R_{CO2}/R_{N2} is large (6 or more)

**Table 1**

| Sample No. | Classification | Configuration of gas separation membrane | | | | | | | Evaluation result of gas separation membrane | | | | |
|---|---|---|---|---|---|---|---|---|---|---|---|---|---|
| | | Separation layer | | Porous layer | | | Ratio d/t | Ratio T/t | Coverage of separation layer | Gas permeability of carbon dioxide | Gas selectivity ratio of carbon dioxide to nitrogen | Mechanical characteristic | |
| | | Material | Average thickness t | Material | Average hole diameter d | Average thickness T | | | | | | Self-standing | Folding endurance |
| | | - | nm | - | nm | µm | - | - | % | GPU | - | - | - |
| 1 | Examples | p-OPS | 10 | Alumina | 200 | 30 | 20 | 3000 | 92 | 18000 | 12 | A | B |
| 2 | Examples | p-OPS | 10 | Alumina | 500 | 60 | 50 | 6000 | 85 | 25000 | 23 | A | B |
| 3 | Examples | p-OPS | 40 | Alumina | 100 | 60 | 2.5 | 1500 | 95 | 14000 | 19 | A | B |
| 4 | Examples | p-OPS | 10 | Alumina | 800 | 90 | 80 | 9000 | 81 | 12000 | 10 | A | B |
| 5 | Examples | p-OPS | 450 | Alumina | 990 | 50 | 2.2 | 111 | 90 | 15000 | 9 | A | B |
| 6 | Examples | p-OPS | 100 | Alumina | 400 | 100 | 4.0 | 1000 | 93 | 16000 | 20 | A | B |
| 7 | Examples | p-OPS | 25 | Alumina | 250 | 100 | 10 | 4000 | 96 | 20000 | 30 | A | B |
| 8 | Examples | p-OPS | 150 | Alumina | 990 | 400 | 6.6 | 2667 | 91 | 9000 | 35 | A | B |
| 9 | Examples | a-OPS | 40 | Alumina | 100 | 70 | 2.5 | 1750 | 95 | 15000 | 22 | A | B |
| 10 | Examples | ph-OPS | 40 | Alumina | 100 | 80 | 2.5 | 2000 | 95 | 16000 | 24 | A | B |
| 11 | Comparative Example | p-OPS | 10 | Alumina | 1500 | 120 | 150 | 12000 | 35 | 55000 | 1.02 | A | C |
| 12 | Comparative Example | p-OPS | 600 | Alumina | 200 | 7500 | 0.3 | 12500 | 95 | 150 | 1.10 | A | C |
| 13 | Comparative Example | p-OPS | 30 | Alumina | 4 | 2 | 0.1 | 67 | 45 | 1000 | 1.05 | | B |
| 14 | Comparative Example | p-OPS | 10 | Alumina | 1500 | 50 | 150 | 5000 | 30 | 60000 | 1.01 | A | B |
| 15 | Comparative Example | p-OPS | 50 | Alumina | 200 | 4 | 4.0 | 80 | 90 | 1000 | 1.05 | C | B |
| 16 | Comparative Example | p-OPS | 3 | Alumina | 10 | 2 | 3.3 | 667 | 50 | 10000 | 1.01 | C | B |

**Table 2**

| Sample No. | Classification | Configuration of gas separation membrane | | | | | | | | | Evaluation result of gas separation membrane | | | | |
|---|---|---|---|---|---|---|---|---|---|---|---|---|---|---|---|
| | | Separation layer | | Intermediate layer | | Porous layer | | | Ratio d/t | Ratio T/t | Coverage of separation layer | Gas permeability of carbon dioxide | Gas selectivity ratio of carbon dioxide to nitrogen | Mechanical characteristic | |
| | | Material | Average thickness t | Material | Average thickness | Material | Average hole diameter d | Average thickness T | | | | | | Self- standing | Folding endurance |
| | | - | nm | - | nm | - | nm | µm | - | - | % | GPU | - | - | - |
| 17 | Examples | p-OPS | 10 | poOPS | 5 | Alumina | 200 | 30 | 20 | 3000 | 93 | 18000 | 13 | A | A |
| 18 | Examples | p-OPS | 40 | p-OPS | 20 | Alumina | 100 | 60 | 2.5 | 1500 | 96 | 14000 | 20 | A | A |
| 19 | Examples | p-OPS | 100 | p-OPS | 30 | Alumina | 400 | 100 | 4.0 | 1000 | 94 | 16000 | 21 | A | A |

**Table 3**

| Sample No. | Classification | Configuration of gas separation membrane | | | | | | | Evaluation result of gas separation membrane | | | | |
|---|---|---|---|---|---|---|---|---|---|---|---|---|---|
| | | Separation layer | | Porous layer | | | Ratio d/t | Ratio T/t | Coverage of separation layer | Gas permeability of carbon dioxide | Gas selectivity ratio of carbon dioxide to nitrogen | Mechanical characteristic | |
| | | Material | Average thickness t | Material | Average hole diameter d | Average thickness T | | | | | | Self-standing | Folding endurance |
| | | - | nm | - | nm | µm | - | - | % | GPU | - | - | - |
| 20 | Examples | PLA | 3D | Alumina | 400 | 30 | 13 | 1000 | 99 | 18000 | 33 | A | A |
| 21 | Examples | PLA | 80 | Alumina | 200 | 60 | 2.5 | 750 | 97 | 14000 | 30 | A | A |
| 22 | Examples | PLA | 200 | Alumina | 800 | 100 | 4 | 500 | 95 | 16000 | 26 | A | A |

As is clear from Tables 1 to 3, it was confirmed that the gas separation membranes of Examples were excellent in mechanical characteristics and achieved both good gas selectivity ratio of carbon dioxide and good gas permeability of carbon dioxide, as compared with the gas separation membranes of Comparative Examples.

It has been found that the mechanical characteristics can be particularly improved when an intermediate layer is interposed between the separation layer and the porous layer.

## Claims

1. A gas separation membrane for separating carbon dioxide from a mixed gas containing the carbon dioxide and a non-target component, the gas separation membrane comprising:
a porous layer; and
a separation layer formed of a polymer material and in close contact with one surface of the porous layer, wherein
t is 5 nm or more and 500 nm or less, a ratio d/t is more than 2.0 and 100 or less, and a ratio T/t is 100 or more and 10000 or less, where t is an average thickness of the separation layer, d is an average hole diameter of the porous layer, and T is an average thickness of the porous layer.

2. The gas separation membrane according to claim 1, wherein
the polymer material contains an organopolysiloxane.

3. The gas separation membrane according to claim 1, wherein
the average hole diameter d of the porous layer is 5 nm or more and 1000 nm or less.

4. The gas separation membrane according to claim 1, wherein
the average thickness T of the porous layer is 10 µm or more and 500 µm or less.

5. The gas separation membrane according to claim 1, wherein
a material of the porous layer is a polymer material, a ceramic material, or a metal material.
